**Europäisches Patentamt**

**European Patent Office**

**Office européen des brevets**

(19)

(11) Publication number: **0 112 103**
**A2**

(12) # EUROPEAN PATENT APPLICATION

(21) Application number: **83307354.7**

(22) Date of filing: **02.12.83**

(51) Int. Cl.³: **B 65 D 41/04**

(30) Priority: **14.12.82 US 449798**

(43) Date of publication of application:
**27.06.84 Bulletin 84/26**

(84) Designated Contracting States:
**CH DE FR GB LI NL SE**

(71) Applicant: **CHARLES A. BRESKIN ASSOCIATES INC**
**6 Corporate Park Drive**
**White Plains New York 10604(US)**

(72) Inventor: **Breskin, Charles A.**
**6 Corporate Park Drive**
**White Plains New York, 10604(US)**

(74) Representative: **Lawrence, Peter Robin**
**Broughton et al,**
**GILL JENNINGS & EVERY 53-64 Chancery Lane**
**London WC2A 1HN(GB)**

(54) **Screw-type all plastic closure.**

(57) A removable and reusable screw-type cap 10 for a container 14 having an opening defined by an externally threaded annular neck 12 comprises an injection moulded shell 16 comprising a disc-like cover portion 17 and an internally threaded skirt portion 18 depending from the cover portion and a fitment 20 that is injection moulded as a unitary structure with the shell, the fitment being of a first material and the shell being of a second material that comprises a plastic different from the first material or that has a colour different from the first material.

FIG.3

EP 0 112 103 A2

Croydon Printing Company Ltd.

60/2219/02                    1        CHARLES A. BRESKIN
                                        ASSOCIATES INC

### SCREW-TYPE ALL PLASTIC CLOSURE

This invention relates to reusable screw-type caps for containers that have an opening defined by an externally threaded annular neck. It relates particularly to such caps for beverage containers, especially for carbonated beverage containers and in particular to caps that are constructed entirely of plastic and are usable with both plastic and glass containers.

For many years carbonated beverages and the like have been sold in glass containers having reusable screw-type caps constructed of a metal shell having a paper or composition liner which sealingly engaged the free annular edge at the upper end of the neck defining an opening in the beverage containers. More recently, plastic beverage containers have become popular and while caps with metal shells continue to be used with plastic containers, certain problems have arisen which make it desirable to use all plastic caps with plastic containers.

There are some plastic cap constructions which consist of a single element of homogeneous plastic. However, for the most part plastic caps are constructed of a shell and a liner with the shell being constructed of one type of plastic and the liner being constructed of another type of plastic or of a composition material. Such liners may be separate elements that are inserted into the shell as in U.S. Patent No. 4,206,851, or the liner may be of the flowed-in type as in U.S. Patents Nos. 4,331,249, 4,346,812, 3,958,910 and 4,088,730. Also existing plastic cap constructions have the tendency to permit doming of the top of the cap or other distortion of parts of the cap.

While it appears desirable to utilise all plastic cap constructions, material costs and£or labour costs have been so high as to retard adoption of all-plastic

2

caps. In particular, in the case of caps having separate liners, a separate assembly operation is required to insert the liner into the shell, and in the case of the flowed-in type liner, it is difficult to form the linerwith precision and to prevent relative movement between the liner and the shell.

According to the invention a removable and reusable screw-type cap for a container having an opening defined by an externally threaded annular neck comprises ————————————————————————

an injection moulded shell that comprises a disc-like cover portion and an internally threaded skirt portion depending from the periphery of the cover portion and that contains a fitment that is located adjacent the cover portion and that has an exposed annular surface portion operatively positioned to engage the free end of the neck of a container and this cap is characterised in that the fitment is injection moulded of a first material as a unitary structure with the shell, the shell being injection moulded of a second material that comprises a plastic different from the first material or that has a colour different from the first material.

The second material is preferably substantially stiffer than the first material and the fitment is preferably resiliently deformable to sealingly engage the containers annular neck. The first material is generally a thermoplastic elastomer but other materials having similar resiliency and deformation properties may be used. The second material is generally polypropylene or high density polyethylene but other materials having similar stiffness and strength properties may be used.

The cap is constructed to the shape and configuration required for the particular container on which it is to be fitted. This container is generally a carbonated beverage container.

The fitment and the shell in the cap are normally injection moulded in a single moulding cavity and combined in the cavity as a unitary structure.

The invention includes also a method of making a removable and reusable screw-type cap for a container having an opening defined by an externally threaded annular neck and the cap comprising a disc-like cover portion and an internally threaded skirt portion

4

depending from the periphery of the cover portion and that contains a fitment that is located adjacent the cover portion and that has an exposed annular surface portion operatively positioned to engage the free end of the neck of the container, the method comprising injection moulding the shell and being characterised in that the fitment and shell are moulded in respective first and second portions of a single moulding cavity and are combined in the cavity as a unitary structure and in which the fitment is formed of a first material and the shell is formed of a second material that comprises a plastic different from the first material or a colour different from the first material.

Preferably the fitment is formed in the cavity before the shell is formed and portions of the fitment are embedded in the shell.

Thus in the invention both the shell and fitment are formed in sequence by injection moulding in different portions of a single moulding cavity, and in a manner such that neither the shell nor the fitment requires handling until the cap is completed. Suitable moulding equipment for constructing the cap of the instant invention is disclosed in copending United States Patent Application Serial No. 305,382, filed September 24, 1981, for "Injection Moulding Apparatus for Manufacturing Articles from Different types of Plastic Material". This U.S. application corresponds to the PCT application filed in West Germany on October 2, 1980 and assigned Serial No. P 30 37 252.2.

Normally the fitment includes a ring having a lip along its outer edge extending away from the cover portion of the shell and the exposed annular surface is part of the ring. The fitment may also include a hub surrounded by the ring and a plurality of spokes radiating from the hub and connected to the ring. The hub and spokes preferably are substantially embedded in portions of the cover portion of the shell and the edge of the lip remote from the ring and the outer surface of the ring are preferably in intimate contact with the shell.

The invention is now described with reference to the accompanying drawings in which:

Figure 1 is a side elevation of a closure cap constructed in accordance with teachings of the instant invention;

Figure 2 is a bottom view of the cap looking in the direction of arrows 2-2 of Figure 1;

Figure 3 is a cross-section through line 3-3 of Figure 2, looking in the direction of arrows 3-3 and showing the cap mounted to a beverage container;

Figure 4 is a perspective of the fitment constituting the sealing element of the cap.

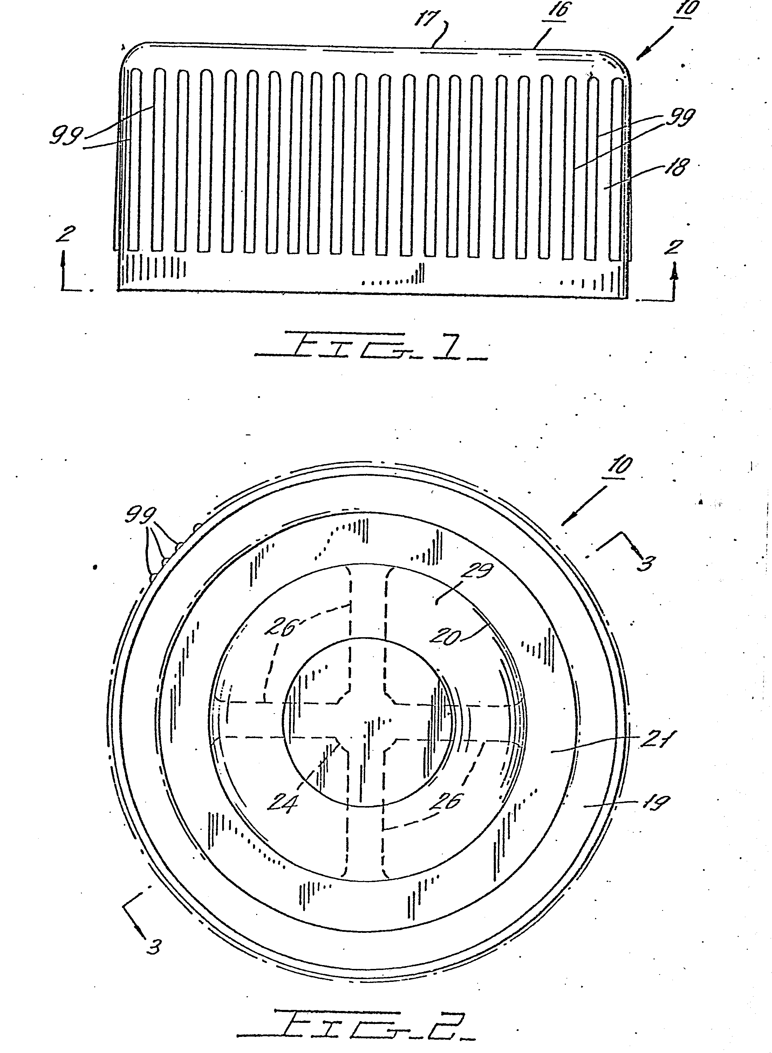

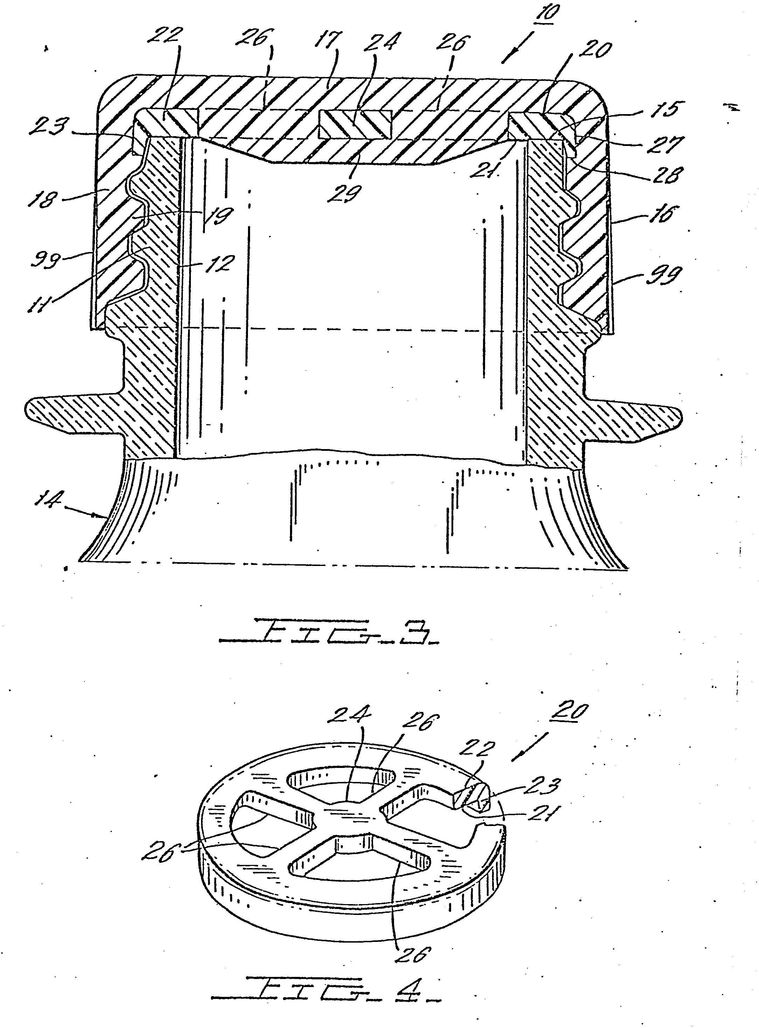

An all-plastic cap 10 is shown in Figure 3 as being mounted to the external threads 11 on annular neck 12 of beverage container 14.

Cap 10 includes plastic shell 16 consisting of disc-like cover 17 and skirt 18 that depends from the periphery of cover 17. The interior of skirt 18 is provided with threads 19 that cooperatively engage threads 11 to removably secure cap 10 to container 14. A plurality of vertically extending ribs 99 on the outside of skirt 18 facilitate firm gripping of cap 10. Embedded in shell 16 at the end of skirt 18 connected to cover 17 is plastic fitment 20 having exposed annular surface 21 that sealingly engages free upper edge 15 of container neck 12.

In particular, fitment 20 includes ring 22 and lip 23 depending from the outer edge of ring 22. Hub 24 is concentric with and surrounded by ring 22, being connected thereto by four radially extending and equally spaced spokes 26.

A suitable material for shell 16 is a polypropylene or high density polyethylene. A vinyl is suitable for fitment 20, and it is generally compounded to provide the desired properties of a thermoplastic elastomer. Thus, for example, a blowing agent may be added so that the resultant structure has a cellular construction which will ensure compression, resilience, etc. The fitment may be constructed of a thermoplastic elastomer such as that sold under the trademark KRATON by the Shell Chemical Company.

Suitable apparatus for constructing beverage cap 10 is disclosed in the aforesaid copending US patent application Serial No. 305,382, filed September 24, 1981. In particular, shell 16 and fitment 20 are injection moulded in different portions of a single moulding cavity. Preferably, fitment 20 is formed first and while shell 16 is being formed fitment 20 remains fixed in that portion of the cavity where fitment 20 was formed. The finished unitary structure constituting cap 10 removed from the moulding cavity was produced without the necessity of intermittent steps requiring movement of fitment 20 or shell 16.

In the final cap 10, hub 24 and spokes 26 are embedded in the enlarged portion 29 at the interior of cover portion 17. Enlarged portion 29 as well as hub 24 and spokes 26 lend rigidity to shell 16 and assist cover 17 to resist doming. Lower free edge 28 of lip 23 and outer surface 27 of lip 23 are in intimate contact with portions of shell 16 to better control distortion of ring 22 when cap 10 is closed tightly on container 14.

Caps of the invention are inexpensive to make, can be made by a single manufacturing step and can prevent leakage of gas under pressure and can prevent leakage of liquid.

CLAIMS

1.     A removable and reusable screw-type cap for a container having an opening defined by an externally threaded annular neck, the cap comprising an injection moulded shell that comprises a disc-like cover portion and an internally threaded skirt portion depending from the periphery of the cover portion and that includes a fitment that is located adjacent the cover portion and that has an exposed annular surface portion operatively positioned to engage the free end of the neck of a container, characterised in that the fitment is injection moulded of a first material as a unitary structure with the shell and the shell is injection moulded of a second material that comprises a plastic different from the first material or that has a colour different from the first material.

2.     A cap according to claim 1 in which the second material is substantially stiffer than the first material and the fitment is resiliently deformable to sealingly engage a containers annular neck.

3.     A cap according to claim 1 or claim 2 in which the first material is a thermoplastic elastomer and the second material is polypropylene or high density polyethylene.

4.     A cap according to any preceding claim in which the fitment includes a ring having a lip along its outer edge extending away from the cover portion of the shell and the exposed annular surface is part of the ring.

5.     A cap according to claim 4 in which the fitment also includes a hub surrounded by the ring and a plurality of spokes radiate from the hub and connect the hub to the ring.

6.     A cap according to claim 5 in which the hub and the spokes are substantially embedded in portions of the cover portion of the shell.

7. A cap according to claim 6 in which the edge of the lip remote from the ring and the outer surface of the ring are in intimate contact with the shell.

8. A cap according to any preceding claim in which the fitment and the shell were moulded in a single moulding cavity and were combined in the cavity as a unitary structure.

9. A cap according to claim 8 in which the fitment was formed in the cavity before the shell was formed and portions of the fitment are embedded in the shell.

10. A method of making a removable and reusable screw-type cap for a container having an opening defined by an externally threaded annular neck the cap comprising a shell that comprises a disc-like cover portion and an internally threaded skirt portion depending from the periphery of the cover portion and that contains a fitment that is located adjacent the cover portion and that has an exposed annular surface portion operatively positioned to engage the free end of the neck of the container and in which the cap is made by injection moulding, characterised in that the fitment and the shell are injection moulded in respective first and second portions of a single moulding cavity and are combined in the cavity as a unitary structure and the fitment is formed of a first material and the shell of a second material that comprises a plastic different from the first material or that has a colour different from the first material, the first and second materials preferably being as defined in claim 2 or claim 3 and the fitment preferably being defined as in any of claims 4 to 7.

11. A method according to claim 10 in which the fitment is formed before the shell is formed and portions of the fitment are embedded in the shell, the fitment remaining in the first portion of the cavity while the shell is being formed.

1/2

0112103

FIG. 1

FIG. 2

_FIG_3_

_FIG_4_